# FASCICULE DE BREVET EUROPEEN

(11) **EP 3 227 076 B1**
(45) Date de publication et mention de la délivrance du brevet: **08.11.2023**
(21) Numéro de dépôt: 15808729.6
(22) Date de dépôt: 24.11.2015
(51) Int. Cl.: B29C 33/30, B29C 70/54, B29C 70/48, B29B 11/16, B29L 31/08, B29C 33/12

(54) **PROCÉDÉ DE CONTROLE DE POSITION D'UNE PRÉFORME DANS UN MOULE**
VERFAHREN ZUR ÜBERPRÜFUNG DER POSITION EINER VORFORM IN EINER FORM
METHOD FOR CHECKING THE POSITION OF A PREFORM IN A MOULD

(30) Priorité: 02.12.2014 FR 1461819
(43) Date de publication de la demande: 11.10.2017
(73) Titulaire: SAFRAN AIRCRAFT ENGINES, 75015 Paris (FR)
(72) Inventeur: TECHER, Marc-Emmanuel, 77550 Moissy-Cramayel Cedex (FR); ASHTARI, Nicolas, 77550 Moissy-Cramayel Cedex (FR)
(74) Mandataire: Gevers & Orès
(86) Numéro de dépôt international: PCT/FR2015/053201
(87) Numéro de publication internationale: WO 2016/087747

(56) Documents cités:
- FR-A1- 2 983 113
- FR-A1- 2 985 939
- US-A1- 2016 101 575

## Description

Le domaine de la présente invention est celui de la fabrication des moteurs à turbine à gaz, tels que des turbomachines, et en particulier ceux destinés à la propulsion des aéronefs.

La présente invention concerne plus particulièrement un procédé de fabrication d'une aube de turbomachine en matériau composite, une préforme destinée à former l'aube de la turbomachine, et un moule pour l'exécution d'un tel procédé.

Une aube de turbomachine présente classiquement un pied et une pale, le pied comportant des faces latérales obliques reliées à la pale et destinées à former des portées d'appui dans un alvéole de montage d'un disque de rotor. L'aube est généralement réalisée en matériaux légers afin de participer à l'allègement de la turbomachine et afin de limiter l'inertie du rotor dont elle fait partie.

Une aube de turbomachine est en outre soumise à des contraintes particulièrement importantes au niveau de son pied, notamment au niveau des portées d'appui. En effet, les efforts exercés sur le flux d'air par la pale, dans la zone radialement externe de celle-ci, crée des contraintes élevées au niveau de sa zone de fixation, c'est-à-dire dans le pied de l'aube. Ceci conduit à utiliser un matériau à la fois léger et résistant pour la fabrication de l'aube.

Une solution connue à ces contraintes consiste à utiliser un matériau composite. Il est ainsi connu de réaliser une aube à l'aide d'une préforme formée par tissage de fibres, lesdites fibres étant compactées et noyées dans une matrice en résine thermodurcissable. Les fibres assurent ainsi la fonction de renfort mécanique, la matrice en résine permettant d'assurer la tenue de l'aube.

Le document EP-A1-1.526.285, au nom du Demandeur, décrit un procédé de fabrication d'une préforme par tissage en trois dimensions de fibres, en particulier de fibres de carbone. La préforme ainsi obtenue comporte une partie de pied et une partie de pale, reliées par des faces latérales obliques destinées à former des portées d'appui du pied dans un alvéole de montage d'un disque de rotor.

Le document EP-A1-1.777.063, également au nom du Demandeur, décrit un procédé de fabrication d'une aube de turbomachine, comprenant successivement des étapes de réalisation d'une préforme par tissage en trois dimensions de fibres, découpe de la préforme, pré-formation de la préforme, puis compactage et rigidification de la préforme. La préforme est ensuite disposée dans un moule dont l'empreinte comporte une zone de pied et une zone de pale, qui sont reliées l'une à l'autre par des faces latérales obliques correspondant aux faces latérales précitées de la préforme, puis on injecte une résine dans le moule, et on démoule l'aube après polymérisation de la résine.

Or, après l'étape de tissage, la préforme présente une épaisseur supérieure à l'épaisseur nominale de la pièce finie, afin d'obtenir le taux de fibre voulu de la pièce après l'étape d'injection de la résine. On dit alors qu'elle est foisonnée.

A l'issue des étapes de pré-formation, compactage et rigidification de la préforme, et préalablement à l'étape d'injection, la préforme n'est pas entièrement compactée. Par exemple, à la fin de ces étapes, la préforme n'est compactée qu'à 80%. Elle ne sera définitivement compactée à 100% qu'au moment de la fermeture de l'outillage d'injection.

Le document FR-A1 -2.983.113 décrit un procédé de fabrication d'une aube de turbomachine dans lequel la préforme est compactée dans un moule d'injection comportant une partie inférieure et une partie supérieure. Pour ce faire, la préforme est disposée dans la partie inférieure de moule, puis on ferme le moule en rapportant la partie supérieure du moule sur la partie inférieure, transversalement par rapport à l'axe longitudinal de l'aube, et on sollicite axialement le pied de la préforme à l'aide d'une partie mobile du moule qui est interposée entre les parties inférieure et supérieure. Le rôle de cette partie mobile est d'obliger les fibres du pied de la préforme à se plaquer contre les faces obliques du moule.

Puis un vide partiel est réalisé dans le moule et une résine thermodurcissable est injectée dans le moule, de façon à imprégner toute la préforme.

La préforme et la résine sont ensuite chauffées afin de polymériser - et donc de durcir- la résine. Les fibres sont alors maintenues en position par la matrice en résine et l'ensemble forme une aube qui est à la fois légère et rigide. Le plaquage des fibres de la préforme contre les faces latérales obliques du moule permet de limiter les creux au niveau de ses zones destinées à former les portées d'appui du pied dans un alvéole de montage d'un disque de rotor.

Toutefois, on a constaté qu'une source importante de défauts réside dans le positionnement de la préforme de tissu dans la partie inférieure du moule.

En effet, le positionnement de cette préforme de tissu dans le moule d'injection est délicat mais essentiel. Or, la fermeture de la partie supérieure du moule est susceptible d'appliquer un effort sur la préforme qui peut avoir tendance à bouger dans le moule et à se déplacer dans une mauvaise position. Dès lors, la préforme peut localement ne plus être plaquée contre les parois du moule, et de ce fait la surface de l'aube risque de présenter, après injection de la résine, des amas ou poches de résine correspondant aux zones n'ayant pas été occupées par le tissage.

La résistance mécanique de ces zones est inférieure à celle qui est normalement requise pour une telle aube, et pour cette raison la présence de tels amas ou poches de résine doit absolument être évitée.

En effet, un positionnement inadéquat du tissu de la préforme ne peut être constaté qu'après injection et démoulage de la pièce. Aucune procédure de réparation n'est alors possible et la pièce doit être mise au rebut.

Le document FR-A1 -2.985.939 décrit un procédé de fabrication d'une aube comportant une pale dans laquelle est reçu un longeron solidaire d'un pied d'aube. Une fois ces éléments assemblés, la position de la pale dans un demi-moule est ajustée en faisant coïncider un faisceau laser avec des mires formées dans la pale. Puis la pale est bridée sur sa périphérie dans le demi-moule. Le faisceau laser étant positionné au-dessus-de l'outillage, cette technologie ne peut s'appliquer à un moule en deux parties et elle est de surcroît particulièrement coûteuse.

L'invention remédie à cet inconvénient en proposant un procédé de fabrication permettant de déterminer la position de la préforme dans le moule avant l'injection afin d'éviter toute erreur de mise en position.

Ainsi, l'invention propose un procédé de fabrication d'une aube de turbomachine en matériau composite comportant :
- une première étape de réalisation d'une préforme d'orientation générale longitudinale, par tissage d'une seule pièce, ledit tissage étant un tissage en trois dimensions de fils, ladite préforme comprenant une partie de pied d'aube et une partie de pale d'aube,
- une deuxième étape de mise en place de la préforme dans une partie inférieure d'un moule, dont une empreinte est sensiblement complémentaire de parties inférieures de la partie de pied d'aube et de la partie de pale d'aube de la préforme, la partie de pied d'aube étant reçue avec un jeu longitudinal par rapport à la partie inférieure du moule,
- une troisième étape de fermeture du moule consistant à rapporter une partie supérieure dudit moule, dont une empreinte est complémentaire de parties supérieures de la partie de pied d'aube et de la partie de pale d'aube de la préforme, sur la partie inférieure du moule contenant la préforme,
- une quatrième étape d'injection sous vide dans le moule d'une résine afin d'imprégner la préforme et de former une aube rigide après polymérisation de la résine.

Conformément à l'invention, ce procédé est caractérisé en ce qu'il comporte :
- au cours de la première étape, au moins une sous-étape d'insertion dans la préforme d'un marqueur de position,
- au cours de la deuxième étape, au moins une sous-étape de montage dans le moule d'un insert formant un repère, la position dudit insert étant définie de manière univoque par rapport à la partie inférieure du moule, au moins une sous-étape de compactage de la préforme dans ledit moule à l'aide dudit insert et au moins une sous-étape de contrôle de la position du marqueur par rapport audit repère.

Selon d'autres caractéristiques du procédé :
- au cours de la sous-étape de contrôle, le contrôle de la position du marqueur par rapport au repère de l'insert est réalisé de manière optique,
- au cours de la sous-étape de contrôle, le contrôle de la position du marqueur est réalisé visuellement par un opérateur,
- la sous-étape de contrôle comporte au moins la mesure visuelle de la position du marqueur par rapport à une paroi de l'insert suivant la direction générale longitudinale de la préforme de l'aube, cette paroi déterminant le repère du moule,
- la première étape de réalisation de la préforme comporte au moins une sous-étape de compactage préalable de ladite préforme.
- au cours de la sous-étape de la première étape, on insère le marqueur de position de la préforme dans une zone de la partie de pied d'aube qui est configurée pour faire l'objet d'une opération de découpe de l'aube finie,
- au cours de la sous-étape de la première étape, on utilise pour le marqueur un fil de couleur différente de celle des fils utilisés pour le tissage de la préforme,
- au cours de la sous-étape de la première étape, on utilise pour le marqueur un fil en fibre de verre ou bien en kevlar inséré dans le tissage des fils de la préforme qui sont en fibres de carbone.

L'invention propose enfin un moule d'imprégnation pour la fabrication d'une aube en matériau composite pour une turbomachine, comportant une partie inférieure de moule dont une empreinte d'orientation sensiblement longitudinale est sensiblement complémentaire d'une partie inférieure d'une préforme d'aube, et une partie supérieure dont une empreinte d'orientation sensiblement longitudinale est sensiblement complémentaire d'une partie supérieure de la préforme d'aube, ladite partie supérieure étant apte à être rapportée sur ladite partie inférieure.

Conformément à l'invention, ce moule est caractérisé en ce qu'il comporte un insert qui est destiné à être fixé par une première extrémité selon une position univoque par rapport à la partie inférieure du moule, et qui est destiné à s'étendre sensiblement longitudinalement au-dessus de l'empreinte de la partie inférieure du moule. Cet insert comporte au moins une seconde extrémité opposée comportant au moins une paroi transversale apte à former un repère lorsque la partie supérieure du moule n'est pas rapportée sur ladite partie inférieure de moule, et il est apte à être entièrement reçu dans une cavité complémentaire d'une partie supérieure du moule lorsque ladite partie supérieure est rapportée sur ladite partie inférieure. Cet insert comporte de plus une paroi affleurant à l'intérieur de l'empreinte de ladite partie supérieure, configurée pour définir une partie de ladite empreinte de ladite partie supérieure et pour compacter la préforme dans le moule.

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figure 1 est une vue schématique en coupe représentative de la troisième étape de fermeture d'un moule d'un procédé de moulage selon un état antérieur de la technique ;
- la figure 2 est une vue schématique d'une préforme à son état à la fin de la sous-étape d'insertion d'un marqueur dans ladite préforme selon le procédé de l'invention ;
- la figure 3 est une vue schématique en coupe représentative de la sous-étape de compactage de la préforme dans le moule à l'aide dudit insert et de la sous-étape de contrôle de la position du marqueur par rapport à un repère du moule selon le procédé de l'invention ;
- la figure 4 est une vue schématique en coupe représentative de la troisième étape de fermeture du moule selon le procédé de l'invention.

Dans la description qui va suivre, des chiffres de référence identiques désignent des pièces identiques ou ayant des fonctions similaires.

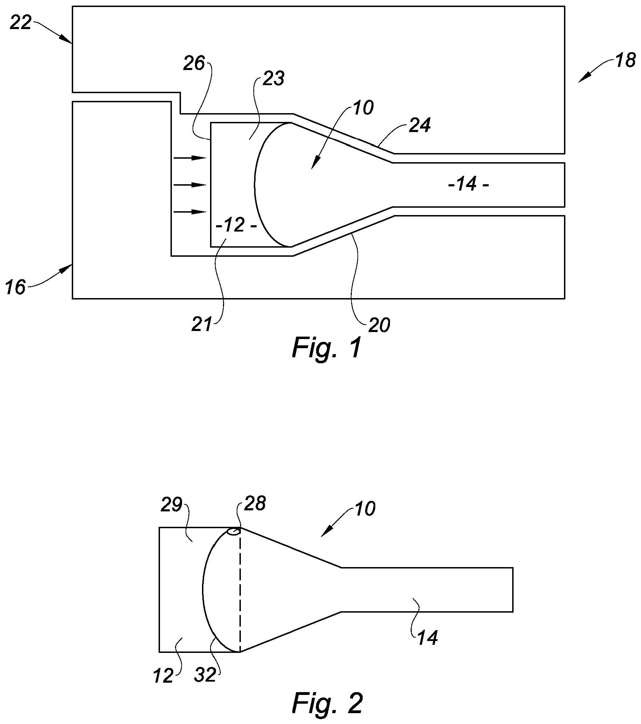

On a représenté à la figure 1 un procédé de fabrication d'une aube de turbomachine en matériau composite selon un état antérieur de la technique. Ce procédé comporte une première étape au cours de laquelle on réalise, par tissage en trois dimensions de fils (non représentés), une préforme 10, comme représenté à la figure 2. Une telle préforme 10 présente une orientation générale longitudinale, correspondant à la direction horizontale de la figure 1.

La préforme 10 est réalisée par tissage d'une seule pièce, généralement en fibres de carbone, et elle comprend pour l'essentiel une partie 12 de pied d'aube, destinée à assurer la fixation de l'aube finie à un disque de rotor de turbomachine, et une partie 14 de pale d'aube destinée à coopérer avec un flux d'air ou de gaz au sein de la turbomachine.

Dans une deuxième étape de ce procédé, on procède à la mise en place de la préforme 10 dans une partie inférieure 16 d'un moule 18 tel que celui qui a été représenté à la figure 1. La partie inférieure 16 comporte une empreinte 20 qui est sensiblement complémentaire d'une partie inférieure 21 de la préforme, c'est-à-dire de parties inférieures de la partie 12 de pied d'aube et de la partie 14 de pale d'aube de la préforme 10.

Le moule 18 comporte une partie supérieure 22 qui est rapportée sur la partie inférieure 16 au cours d'une troisième étape de fermeture du moule 18. Cette partie supérieure 22 comporte une empreinte 24 qui est complémentaire d'une partie supérieure 23 de la préforme 10, c'est-à-dire de parties supérieures de la partie 12 de pied d'aube et de la partie 14 de pale d'aube de la préforme 10. La fermeture du moule 18 permet de délimiter une empreinte complète, constituée de l'empreinte 20 et de l'empreinte 24, qui permet l'injection de résine dans la préforme 10.

Puis le procédé comporte une quatrième étape de compactage de la préforme 10 dans ledit moule 18. Au cours de cette étape, comme l'illustre la figure 1, on exerce généralement un effort sur une extrémité 26 du pied 12 de la préforme, de manière à compacter les fibres au contact des parois des empreintes 20 et 24, comme indiqué par les flèches de la figure 1.

Puis, au cours d'une cinquième étape d'injection, on injecte sous vide dans le moule 18 une résine afin d'imprégner la préforme 10 compactée, ce qui permet de former une aube rigide après polymérisation de la résine.

Enfin, au cours d'une sixième étape de finition, on démoule la préforme 10 brute polymérisée puis on la découpe pour en séparer des chutes, afin d'obtenir l'aube finale. En particulier, des chutes importantes sont agencées au voisinage de l'extrémité libre 26 du pied 12. Pour ce faire, on réalise par exemple la découpe de l'aube selon la ligne pleine 32 de la figure 2, de manière à découper une zone 29 de la partie 12 du pied d'aube de la préforme 10 comprise entre la ligne 32 et l'extrémité libre 26 du pied.

On a constaté qu'un positionnement correct de la préforme de tissu dans l'empreinte 20 de la partie inférieure 16 du moule 18 est une condition indispensable de l'obtention d'une aube finie présentant des caractéristiques de résistance optimales. En effet, un positionnement incorrect de la préforme de tissu dans la partie inférieure du moule 18 peut conduire la préforme 10 à ne plus être plaquée contre les parois du moule 18, et de ce fait la surface de l'aube risque de présenter, après injection de la résine, des amas ou poches de résine correspondant aux zones n'ayant pas été occupées par le tissage.

Or, un positionnement incorrect n'est pas nécessairement visible lorsque la préforme 10 est disposée dans l'empreinte 20 dans la partie inférieure 16 du moule 18 par l'opérateur. En effet, un positionnement incorrect mais non visible peut entraîner, lors de la fermeture du moule 18, l'apparition d'efforts exercés par la partie supérieure 22 du moule 18 sur la préforme 10 qui tendent à provoquer son déplacement dans le moule avant l'injection de résine. C'est donc lorsque la partie supérieure 22 du moule 18 est rabattue sur la partie inférieure 16 que la préforme 10 est la plus susceptible de se déplacer, sans que ce déplacement ait été appréhendé par l'opérateur.

L'invention remédie à cet inconvénient en proposant un procédé de fabrication permettant le contrôle du positionnement de la préforme 10 dans le moule 18 avant l'injection de la résine.

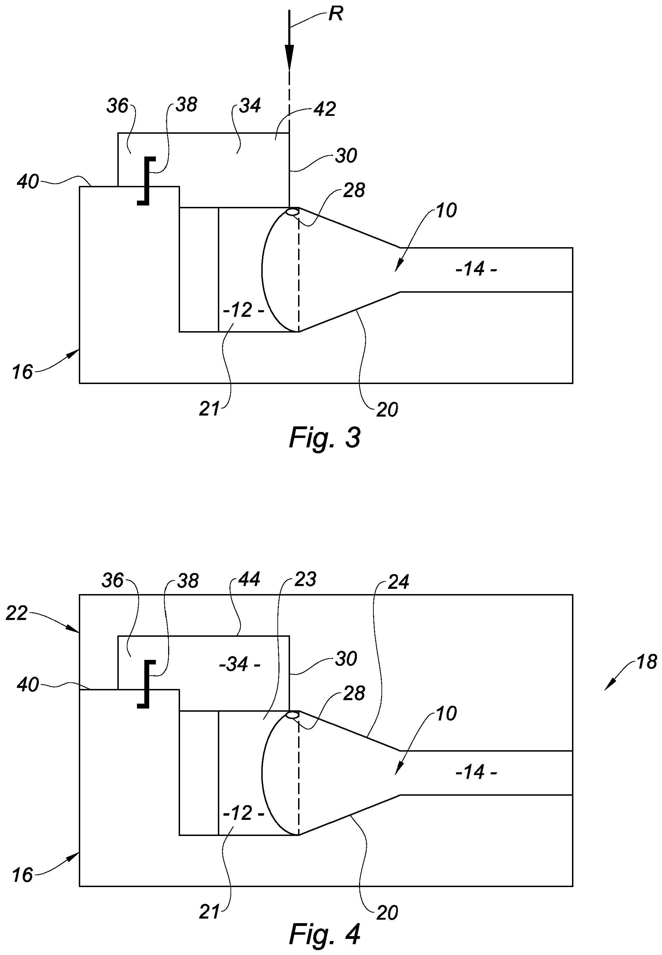

Dans ce but, l'invention propose un procédé qui a été représenté aux figures 3 et 4.

Comme dans le procédé précédemment décrit en référence à l'état de la technique, le procédé comporte une première étape au cours de laquelle une préforme 10 est réalisée par tissage d'une seule pièce, généralement en fibres de carbone, ladite préforme comprenant une partie 12 de pied d'aube, destinée à assurer la fixation de l'aube finie à un disque de rotor de turbomachine, et une partie 14 de pale d'aube destinée à coopérer avec un flux d'air ou de gaz au sein de la turbomachine.

Le procédé selon l'invention comporte une deuxième étape de mise en place de la préforme 10 dans la partie inférieure 16 du moule 18, et une troisième étape de fermeture du moule 18, similairement au procédé connu de l'état de la technique.

Le procédé selon l'invention comporte une quatrième étape d'injection sous vide dans le moule 18 d'une résine destinée à imprégner la préforme 10 et pour former une aube rigide après polymérisation de la résine. Cette quatrième étape est similaire à la cinquième étape du procédé connu de l'état de la technique.

Le procédé selon l'invention diffère du procédé connu de l'état de la technique en ce qui concerne le compactage de la préforme 10 et sa mise en position dans la partie inférieure 16 du moule 18.

Conformément à l'invention, au cours de la première étape, le procédé comporte au moins une sous-étape d'insertion dans la préforme 10 d'un marqueur 28 de position, puis au cours de la deuxième étape, au moins une sous-étape de montage dans le moule 18 d'un insert 34 formant un repère 30 par rapport au moule 18, au moins une sous-étape de compactage de la préforme 10 dans ledit moule 18 à l'aide dudit insert 34, et au moins une sous-étape de contrôle de la position du marqueur 28 par rapport audit repère 30. La position de l'insert 34 est définie de manière univoque par rapport à la partie inférieure 16 du moule 18 pour former un repère 30 dont la position est connue par rapport au moule 18.

Pour mettre en oeuvre ce procédé, il est nécessaire d'utiliser une préforme du type de celle qui a été représentée à la figure 2. La préforme 10 est une préforme comprenant classiquement une partie de pied d'aube 12 et une partie de pale d'aube 14, obtenus en une seule pièce par tissage en trois dimensions de fils, par exemple des fils de carbone.

Conformément à l'invention, la préforme 10 utilisée dans le procédé de l'invention comporte un marqueur 28 de position qui est inséré dans le tissage de ladite préforme 10 lors de sa fabrication. L'insertion du marqueur 28 à ce stade permet d'éviter une opération ultérieure d'insertion du marqueur 28, opération qui risquerait d'endommager le tissage de la préforme 10, et d'autre part permet d'inclure ledit marqueur 28 dans le tissage de la préforme, de façon qu'il ne fasse pas saillie et que la préforme 10 ne présente pas d'aspérité qui serait susceptible de gêner son contact avec les parois du moule. Le marqueur de position 28 est inséré dans la partie 12 de pied d'aube de la préforme 10.

De manière non limitative de l'invention, la préforme 10 pourrait comporter d'autres marqueurs de position 28.

De manière également non limitative de l'invention, le marqueur pourrait être placé dans une zone de la partie du pied d'aube 12 de la préforme 10 destinée à faire l'objet d'une opération de découpe pour l'obtention de l'aube finie, similaire à la zone 29 décrite en référence à la figure 2.

Avantageusement, un mode de réalisation simple du marqueur 28 consiste à utiliser pour sa réalisation un fil de couleur différente de celle des fils utilisés pour le tissage de la préforme 10, inséré dans le tissage de la préforme 10. Ceci d'une part permet d'assurer une homogénéité du tissage et d'autre part de former une mire optique à la surface de la préforme 10.

Par exemple, le marqueur 28 est un fil en fibre de verre ou éventuellement en kevlar.

On comprendra ainsi que, au cours de la sous-étape de contrôle, le contrôle de la position du marqueur 28 est réalisé de manière optique, c'est-à-dire que le marqueur 28 est destiné à former une mire dont la présence, l'absence ou la position par rapport au repère fixe 30 du moule 28, est susceptible d'être détectée par tout procédé faisant intervenir la réflexion de rayons lumineux sur la surface du marqueur 28.

Ainsi, dans le mode de mise en oeuvre préféré de l'invention, au cours de la sous-étape de contrôle, le contrôle de la position du marqueur 28 est réalisé manière très simple visuellement par un opérateur.

Pour ce faire, au cours de la deuxième étape, préalablement à la sous-étape de contrôle, le procédé comporte une sous-étape de montage dans le moule d'un insert 34 formant un repère, la position dudit insert 34 étant définie de manière univoque par rapport à la partie inférieure 16 du moule 18.

Par exemple, comme l'illustre la figure 3, l'insert 34 comporte une première extrémité 36 par laquelle il est fixé à l'aide d'un moyen de liaison 38, tel qu'une vis ou un tirant, à la partie 16 inférieure du moule 18. Par exemple, de manière non limitative de l'invention, l'insert 34 est fixé sur une face supérieure 40 de la partie 16 inférieure du moule 18. L'insert 34 est fixé selon une position univoque par rapport à la partie inférieure 16 du moule 18, de sorte que sa position est connue et invariable.

L'insert 34 est fixé à la partie 16 inférieure du moule 18 postérieurement à l'introduction de la préforme 10 dans la partie inférieure 16 du moule 18.

L'insert 34 s'étend sensiblement longitudinalement au-dessus de l'empreinte 20 de la partie inférieure 16 du moule 18.

L'insert 34 comporte une paroi inférieure 41, configurée pour être agencée au contact de la préforme 10 pour en assurer le compactage. De préférence, la paroi inférieure 41 est configurée pour assurer le compactage de la partie 12 de pied d'aube de la préforme 10. Cette configuration n'est pas limitative de l'invention. Toutefois, on a constaté que cette partie 12 de pied d'aube de la préforme 10 est plus épaisse et c'est donc cette partie qui doit en priorité être compactée.

L'insert 34 comporte au moins une seconde extrémité opposée 42 comportant formant le repère 30. Cette extrémité 42 comporte au moins une paroi transversale 30 apte à constituer le repère 30 tant que la partie supérieure 22 du moule 18, représentée à la figure 4, n'est pas rapportée sur ladite partie inférieure 16 du moule 18. La comparaison de la position du marqueur 28 de la préforme 10 avec le repère 30 permet de vérifier le positionnement correct de la préforme 10 après le compactage de sa partie 12 de pied d'aube par l'insert 34.

Pour effectuer la sous-étape de contrôle de la position du marqueur 28 par rapport au repère 30 du moule 18, un opérateur peut par exemple positionner son oeil suivant la direction de la flèche "R" et constater la position du marqueur 28.

Dans ce cas, plusieurs méthodes de mesures peuvent être envisagées en fonction des tolérances de positionnement du marqueur 28.

Selon une conception impliquant un positionnement strict, on considère que la position du marqueur 28 n'est correcte que dans le cas de son alignement avec la paroi transversale 30 de l'insert 34. Dans ce cas, tout écart du marqueur 28 avec cette position, notamment lorsqu'il s'écarte de la paroi 30, vers la droite de la figure 3 ou qu'il disparait sous l'insert 34, vers la gauche de la figure 3, est synonyme de positionnement incorrect.

On remarquera que selon cette conception, la paroi transversale 30 de l'insert pourrait avantageusement être remplacée par un puits vertical ou une lumière (non représentée) formée dans un insert 34 plus long, une position correcte du marqueur 28 correspondant alors à l'alignement de ce puits ou de cette lumière avec le marqueur 28. Dans ce cas, c'est l'absence du marqueur 28 en face de ce puits ou de cette lumière qui stigmatise le défaut de positionnement de la préforme 10. On notera que dans cette éventualité, ce puits ou cette lumière doit être obturé préalablement à l'injection afin de ne pas permettre la pénétration de la résine dans le puits ou dans cette lumière lors de l'injection de la résine, pénétration qui aurait pour conséquence la création d'un défaut à la surface de la pièce. Par exemple, il est possible de prévoir que le puits ou la lumière reçoivent un matériau transparent comme du verre, permettant d'examiner la position du marqueur 28 de la préforme 10 sans permettre que la résine ne s'insinue dans ce puits ou cette lumière.

Selon une conception impliquant un positionnement dans une plage de valeurs déterminée, on considère que la position du marqueur 28 est correcte dans une plage de valeurs déterminée. L'opérateur est alors en charge de mesurer la distance entre le marqueur 28 et la paroi 30 et de déterminer si cette position, suivant la direction générale longitudinale de la préforme de l'aube, entre dans la plage de valeurs correspondant à un positionnement correct de la préforme.

On comprendra que selon d'autres conceptions, le contrôle de la position du marqueur 28 peut être réalisé de manière optique et assistée, voire automatisée, mais non directement visuelle.

Ainsi, il est également possible de contrôler le positionnement strict du marqueur 28 à l'aide d'un faisceau de lumière monochromatique ou laser émis selon la direction "R" ou dans un plan transversal contenant la direction "R", la réflexion du faisceau sur le marqueur 28 et la captation du faisceau réfléchi correspondant à un positionnement correct du marqueur 28 et donc à un positionnement correct de la préforme 10, alors qu'inversement l'absorption du faisceau par les fibres de carbone de la préforme 10 correspond à un positionnement incorrect de la préforme 10.

De même, il est possible d'effectuer une mesure optique à l'aide d'une caméra placée selon la direction "R", dont l'image est traitée par un algorithme approprié pour déterminer, selon les tolérances envisagées, si la position du marqueur 28 est respectée strictement ou si elle fait partie d'une plage de valeurs déterminée associées à la validation du positionnement de la préforme.

Plus généralement, il sera compris que toute méthode de mesure optique ou visuelle peut convenir à la mise en oeuvre de la sous-étape de contrôle de la position du marqueur 28 par rapport à la paroi 30 formant le repère du moule 18.

Comme on l'a vu, au cours d'une troisième étape de fermeture du moule, on rapporte une partie supérieure 22 dudit moule 18, sur la partie inférieure 16 du moule 18 contenant la préforme 10.

Avantageusement, l'insert 34 est apte à être entièrement reçu dans une cavité 44 complémentaire de la partie supérieure 22 du moule 18 lorsque ladite partie supérieure 18 est rapportée sur la partie inférieure 16. L'insert 34 affleure alors l'intérieur de l'empreinte 24 de la partie supérieure 22, de sorte que sa paroi inférieure 41 définit une partie de ladite empreinte 24.

Cette configuration permet d'éviter de démonter l'insert 34, opération qui d'une part serait chronophage et inutile, et d'autre part risquerait de provoquer un mouvement de la préforme 10 dans la partie inférieure 16 du moule 18.

Puis, au cours d'une quatrième étape, on injecte sous vide dans le moule 18 d'une résine afin d'imprégner la préforme 10 et de former une aube rigide après polymérisation de la résine.

On remarquera que le procédé selon l'invention permet le compactage de la préforme 10 à l'aide de l'insert 34. Toutefois, le compactage de la préforme 10 n'est de préférence pas assuré uniquement par l'insert 34.

Ainsi, la première étape de réalisation de la préforme 10 comporte au moins une sous-étape de compactage préalable de la préforme 10. Le taux de compactage de la préforme 10 au cours de cette sous-étape est de préférence élevé. Par exemple, on réalise 80% du compactage de la préforme 10 au cours de cette opération. Ainsi, c'est une préforme 10 sensiblement rigide qui est introduite dans la partie inférieure 16 du moule 18. Le positionnement de l'insert 34 permet alors de réaliser les 20% du compactage demeurants à effectuer.

L'invention propose donc un procédé particulièrement simple et avantageux qui permet de contrôler les éventuels déplacements non voulus d'une préforme tissée 10 dans un moule 18 au cours d'un procédé de moulage d'une aube par injection de résine, et par conséquent de limiter les défauts pouvant conduire l'aube au rebut. Compte tenu de la durée élevée de polymérisation d'une telle aube, l'utilisation de ce procédé, en réduisant de manière drastique le nombre d'aubes mises au rebut, permet d'augmenter de manière significative la production d'aubes de turbomachine.

## Revendications

1. Procédé de fabrication d'une aube de turbomachine en matériau composite comportant :
- une première étape de réalisation d'une préforme (10) d'orientation générale longitudinale, par tissage d'une seule pièce, ledit tissage étant un tissage en trois dimensions de fils, ladite préforme comprenant une partie (12) de pied d'aube et une partie (14) de pale d'aube,
- une deuxième étape de mise en place de la préforme (10) dans une partie inférieure (16) d'un moule (18), dont une empreinte (20) est sensiblement complémentaire de parties inférieures de la partie (12) de pied d'aube et de la partie (14) de pale d'aube de la préforme (10), la partie (12) de pied d'aube étant reçue avec un jeu longitudinal par rapport à la partie inférieure (16) du moule (18),
- une troisième étape de fermeture du moule (18) consistant à rapporter une partie supérieure (22) dudit moule, dont une empreinte (24) est complémentaire de parties supérieures de la partie (12) de pied d'aube et de la partie (14) de pale d'aube de la préforme (10), sur la partie inférieure (16) du moule (18) contenant la préforme (10),
- une quatrième étape d'injection sous vide dans le moule (18) d'une résine afin d'imprégner la préforme (10) et de former une aube rigide après polymérisation de la résine,
**caractérisé en ce qu'**il comporte :
- au cours de la première étape, au moins une sous-étape d'insertion dans la préforme (10) d'un marqueur (28) de position,
- au cours de la deuxième étape, au moins une sous-étape de montage dans le moule (18) d'un insert (34) formant un repère (30), la position dudit insert (34) étant définie de manière univoque par rapport à la partie inférieure (16) du moule (18), au moins une sous-étape de compactage de la préforme (10) dans ledit moule (18) à l'aide dudit insert (34), et au moins une sous-étape de contrôle de la position du marqueur (28) par rapport audit repère (30).

2. Procédé de fabrication selon la revendication précédente, **caractérisé en ce que**, au cours de la sous-étape de contrôle, le contrôle de la position du marqueur (28) par rapport au repère (30) de l'insert (34) est réalisé de manière optique.

3. Procédé de fabrication selon la revendication précédente, **caractérisé en ce que**, au cours de la sous-étape de contrôle, le contrôle de la position du marqueur (28) est réalisé visuellement par un opérateur.

4. Procédé de fabrication selon la revendication précédente, **caractérisé en ce que** la sous-étape de contrôle comporte au moins la mesure visuelle de la position du marqueur (28) par rapport à une paroi de l'insert (34) suivant la direction générale longitudinale de la préforme (10) de l'aube, cette paroi déterminant le repère (30) du moule.

5. Procédé de fabrication selon l'une des revendications précédentes, caractérisé en ce la première étape de réalisation de la préforme (10) comporte au moins une sous-étape de compactage préalable de ladite préforme (10).

6. Procédé de fabrication selon l'une des revendications précédentes, **caractérisé en ce que**, au cours de la sous-étape de la première étape, on insère le marqueur (28) de position de la préforme (10) dans une zone (29) de la partie (12) de pied d'aube qui est configurée pour faire l'objet d'une opération de découpe pour l'obtention de l'aube finie.

7. Procédé de fabrication selon la revendication précédente, **caractérisé en ce que**, au cours de la sous-étape de la première étape, on utilise pour le marqueur (28) un fil de couleur différente de celle des fils utilisés pour le tissage de la préforme (10).

8. Procédé de fabrication selon la revendication 6 ou 7, **caractérisé en ce que**, au cours de la sous-étape de la première étape, on utilise pour le marqueur (28) un fil en fibre de verre ou bien en kevlar inséré dans le tissage des fils de la préforme qui sont en fibres de carbone.

9. Moule d'imprégnation (18) pour la fabrication d'une aube en matériau composite pour une turbomachine, comportant une partie inférieure (16) de moule dont une empreinte (20) d'orientation sensiblement longitudinale est sensiblement complémentaire d'une partie inférieure (21) d'une préforme (10) d'aube, et une partie supérieure (22) dont une empreinte (24) d'orientation sensiblement longitudinale est sensiblement complémentaire d'une partie supérieure (23) de la préforme (10) d'aube, ladite partie supérieure (22) étant apte à être rapportée sur ladite partie inférieure (16), le moule est tel qu'il comporte un insert (34) qui est destiné à être fixé par une première extrémité (36) selon une position univoque par rapport à la partie inférieure (16) du moule (18),
qui est destiné à s'étendre sensiblement longitudinalement au-dessus de l'empreinte (20) de la partie inférieure (16) du moule (18),
qui comporte au moins une seconde extrémité opposée (42) comportant au moins une paroi transversale (30) apte à former un repère lorsque la partie supérieure (22) du moule (18) n'est pas rapportée sur ladite partie inférieure (16) de moule,
qui est apte à être entièrement reçu dans une cavité (44) complémentaire d'une partie supérieure (22) du moule lorsque ladite partie supérieure (22) est rapportée sur ladite partie inférieure (16), et
et qui comporte au moins une paroi affleurant à l'intérieur de l'empreinte (24) de ladite partie supérieure (22), configurée pour définir une partie de ladite empreinte (24) de ladite partie supérieure (22) et pour compacter la préforme (10) dans ledit moule (18).

## Patentansprüche

1. Verfahren zur Anfertigung einer Turbinenmotorschaufel aus Verbundmaterial, umfassend:
- einen ersten Schritt der Ausführung einer Vorform (10) mit allgemeiner längslaufender Ausrichtung durch Verweben eines einzigen Stücks, wobei das Gewebe ein dreidimensionales Fasergewebe ist, wobei die Vorform einen Schaufelfußteil (12) und einen Schaufelblattteil (14) umfasst,
- einen zweiten Schritt des Einsetzens der Vorform (10) in einem unteren Teil (16) einer Form (18), bei dem ein Abdruck (20) im Wesentlichen komplementär zu unteren Teilen des Schaufelfußteils (12) und des Schaufelblattteils (14) der Vorform (10) ist, wobei der Schaufelfußteil (12) in Bezug auf den unteren Teil (16) der Form (18) mit einem Längsspiel aufgenommen wird,
- einen dritten Schritt des Verschließens der Form (18), der darin besteht, einen oberen Teil (22) der Form, bei dem ein Abdruck (24) komplementär zu oberen Teilen des Schaufelfußteils (12) und des Schaufelblattteils (14) der Vorform (10) ist, an dem unteren Teil (16) der Form (18), der die Vorform (10) enthält, anzustücken,
- einen vierten Schritt des vakuumdichten Einspritzens eines Harzes in die Form (18), um die Vorform (10) zu imprägnieren und nach Polymerisation des Harzes eine starre Schaufel zu erzeugen,
**dadurch gekennzeichnet, dass** es umfasst:
- im Verlaufe des ersten Schrittes, mindestens einen Teilschritt des Einfügens eines Positionsmarkierers (28) in die Vorform (10),
- im Verlaufe des zweiten Schrittes, mindestens einen Teilschritt des Einbauens eines Einsatzes (34) in die Form (18), der einen Bezugspunkt (30) bildet, wobei die Position des Einsatzes (34) in Bezug auf den unteren Teil (16) der Form (18) auf eindeutige Weise definiert ist, mindestens einen Teilschritt des Komprimierens der Vorform (10) in der Form (18) mithilfe des Einsatzes (34) und mindestens einen Teilschritt der Steuerung der Position des Markierers (28) in Bezug auf den Bezugspunkt (30).

2. Verfahren zur Anfertigung nach dem vorstehenden Anspruch, **dadurch gekennzeichnet, dass** die Steuerung der Position des Markierers (28) in Bezug auf den Bezugspunkt (30) des Einsatzes (34) während des Teilschritts der Steuerung auf optische Weise ausgeführt wird.

3. Verfahren zur Anfertigung nach dem vorstehenden Anspruch, **dadurch gekennzeichnet, dass** die Steuerung der Position des Markierers (28) während des Teilschritts der Steuerung visuell durch einen Betreiber ausgeführt wird.

4. Verfahren zur Anfertigung nach dem vorstehenden Anspruch, **dadurch gekennzeichnet, dass** der Teilschritt der Steuerung mindestens die visuelle Messung der Position des Markierers (28) in Bezug auf eine Wand des Einsatzes (34) entlang der allgemeinen längslaufenden Richtung der Vorform (10) der Schaufel umfasst, wobei diese Wand den Bezugspunkt (30) der Form bestimmt.

5. Verfahren zur Anfertigung nach einem der vorstehenden Ansprüche, **dadurch gekennzeichnet, dass** der erste Schritt der Ausführung der Vorform (10) mindestens einen vorangehenden Teilschritt des Komprimierens der Vorform (10) umfasst.

6. Verfahren zur Anfertigung nach einem der vorstehenden Ansprüche, **dadurch gekennzeichnet, dass** der Positionsmarkierer (28) der Vorform (10) im Verlaufe des Teilschritts des ersten Schritts in einen Bereich (29) des Schaufelfußteils (12) eingesetzt wird, der dazu konfiguriert ist, Gegenstand eines Schneidevorgangs zu sein, um die endgültige Schaufel zu erhalten.

7. Verfahren zur Anfertigung nach dem vorstehenden Anspruch, **dadurch gekennzeichnet, dass** im Verlaufe des Teilschritts des ersten Schritts für den Markierer (28) eine Faser mit unterschiedlicher Farbe verwendet wird als jene der Fasern, die für das Gewebe der Vorform (10) verwendet werden.

8. Verfahren zur Anfertigung nach dem Ansprüche 6 oder 7, **dadurch gekennzeichnet, dass** im Verlaufe des Teilschritts des ersten Schritts für den Markierer (28) eine Faser aus Glaswolle oder aus Kevlar verwendet wird, die in das Gewebe der Fasern der Vorform eingesetzt wird, die aus Kohlefaser sind.

9. Imprägnierungsform (18) zur Anfertigung einer Schaufel aus Verbundmaterial für eine Turbomaschine, umfassend einen unteren Formteil (16), bei dem ein Abdruck (20) mit im Wesentlichen länglslaufender Ausrichtung im Wesentlichen komplementär zu einem unteren Teil (21) einer Schaufelvorform (10) ist, und einen oberen Teil (22), bei dem ein Abdruck (24) mit im Wesentlichen länglslaufender Ausrichtung im Wesentlichen komplementär zu einem oberen Teil (23) der Schaufelvorform (10) ist, wobei der obere Teil (22) dazu angepasst ist, an dem unteren Teil (16) angestückt zu werden, wobei die Form derart ist, dass sie einen Einsatz (34) umfasst, der dazu vorgesehen ist, gemäß einer eindeutigen Position in Bezug auf den unteren Teil (16) der Form (18) über ein erstes Ende (36) befestigt zu werden,
die dazu vorgesehen ist, sich im Wesentlichen längslaufend oberhalb des Abdrucks (20) des unteren Teils (16) der Form (18) zu erstrecken,
die mindestens ein zweites, gegenüberliegendes Ende (42) umfasst, das mindestens eine querverlaufende Wand (30) umfasst, die dazu angepasst ist, einen Bezugspunkt zu bilden, wenn der obere Teil (22) der Form (18) nicht am unteren Formteil (16) angestückt ist,
die dazu angepasst ist, vollständig in einem zu einem oberen Teil (22) der Form komplementären Hohlraum (44) aufgenommen zu werden, wenn der obere Teil (22) am unteren Teil (16) angestückt wird, und
und die mindestens eine Wand umfasst, die mit der Innenseite des Abdrucks (24) des oberen Teils (22) bündig ist, der dazu konfiguriert ist, einen Teil des Abdrucks (24) des oberen Teils (22) zu definieren und die Vorform (10) in der Form (18) zu komprimieren.

## Claims

1. Method for manufacturing a turbine engine blade from composite material comprising:
- a first step of producing a preform (10) having a general longitudinal orientation by weaving a single piece, said weave being a three-dimensional yarn weave, said preform comprising a blade root part (12) and a blade vane part (14);
- a second step of placing the preform (10) in a lower part (16) of a mould (18), a recess (20) of which substantially matches lower parts of the blade root part (12) and of the blade vane part (14) of the preform (10), the blade root part (12) being received with a longitudinal clearance relative to the lower part (16) of the mould (18);
- a third step of closing the mould (18), which step consists in placing an upper part (22) of said mould, a recess (24) of which matches upper parts of the blade root part (12) and of the blade vane part (14) of the preform, on the lower part (16) of the mould (18) containing the preform (10);
- a fourth step of vacuum injecting a resin into the mould (18) with a view to impregnating the preform (10) and to forming a rigid blade following resin polymerisation,
**characterised in that** it comprises:
- during the first step, at least one sub-step of inserting a position marker (28) into the preform (10);
- during the second step, at least one sub-step of fitting an insert (34) into the mould (18) forming a reference mark (30), the position of said insert (34) being clearly defined relative to the lower part (16) of the mould (18), at least one sub-step of compacting the preform (10) in said mould (18) using said insert (34), and at least one sub-step of checking the position of the marker (28) relative to said reference mark (30).

2. Manufacturing method according to the preceding claim, **characterised in that**, during the checking sub-step, the position of the marker (28) relative to the reference mark (30) of the insert (34) is optically checked.

3. Manufacturing method according to the preceding claim, **characterised in that**, during the checking sub-step, the position of the marker (28) is visually checked by an operator.

4. Manufacturing method according to the preceding claim, **characterised in that** the checking sub-step comprises at least the visual measurement of the position of the marker (28) relative to a wall of the insert (34) in the general longitudinal direction of the preform (10) of the blade, said wall determining the reference mark (30) of the mould.

5. Manufacturing method according to any of the preceding claims, **characterised in that** the first step of producing the preform (10) comprises at least one sub-step of prior compacting of said preform (10).

6. Manufacturing method according to any of the preceding claims, **characterised in that**, during the sub-step of the first step, the position marker (28) of said preform is inserted into a zone (29) of the blade root part (12) which is configured to undergo a cutting operation to obtain the finished blade.

7. Manufacturing method according to the preceding claim, **characterised in that**, during the sub-step of the first step, a yarn having a different colour to that of the yarns used to weave the preform (10) is used as the marker (28).

8. Manufacturing method according to claim 6 or 7, **characterised in that**, during the sub-step of the first step, a glass fibre or else Kevlar yarn is used as the marker and is inserted in the weave of the preform yarns, which are carbon fibres.

9. Impregnation mould (18) for manufacturing a blade from composite material for a turbine engine, comprising a lower mould part (16) having a recess (20) of substantially longitudinal orientation that substantially matches a lower part (21) of a blade preform (10), and an upper part (22) having a recess (24) of substantially longitudinal orientation that substantially matches an upper part (23) of the blade preform (10), said upper part (22) being able to be placed on said lower part (16),
the mould is such that it comprises an insert (34), which is intended to be fixed by a first end (36) in a clear position relative to the lower part (16) of the mould (18),
which is intended to extend substantially longitudinally above the recess (20) of the lower part (16) of the mould (18),
which comprises at least one second opposite end (42) comprising at least one transverse wall (30) able to form a reference mark when the upper part (22) of the mould (18) is not placed on said lower part (16) of the mould, which is able to be fully received in a matching cavity (44) of an upper part (22) of the mould when said upper part (22) is placed on said lower part (16), and
which comprises at least one wall flush with the inside of the recess (24) of said upper part (22), which wall is configured to define part of said recess (24) of said upper part (22) and to compact the preform (10) inside said mould (18).
